**Europäisches Patentamt**

**European Patent Office**

**Office européen des brevets**

(19)

(11) Publication number : **0 533 257 B1**

(12) # EUROPEAN PATENT SPECIFICATION

(45) Date of publication of patent specification :
28.06.95 Bulletin 95/26

(51) Int. Cl.⁶ : **G10L 3/00**

(21) Application number : **92202780.0**

(22) Date of filing : **11.09.92**

(54) Human speech processing apparatus for detecting instants of glottal closure.

(30) Priority : **20.09.91 EP 91202437**

(43) Date of publication of application :
**24.03.93 Bulletin 93/12**

(45) Publication of the grant of the patent :
**28.06.95 Bulletin 95/26**

(84) Designated Contracting States :
**DE FR GB IT SE**

(56) References cited :
**US-A- 3 381 091**
**US-A- 3 940 565**
**EUROSPEECH 89 vol. 2, September 1989,
PARIS pages 27 - 30 , XP209948 A.P.LOBO ET
AL. 'Evaluation of a glottal arma modelling
scheme'
J.ACOUST.SOC.AM. vol. 56, no. 5, November
1974, pages 1625 - 1629 H.W.STRUBE 'Deter-
mination of the instant of glottal closure from
the speech'**

(56) References cited :
**EUROSPEECH 89 vol. 2, September 1989,
PARIS pages 39 - 42 , XP209951 R.DI FRAN-
CESCO ET AL. 'Detection of the glottal closure
by jumps in the statistical properties of the
signal'
IEEE TRANSACTIONS ON ACOUSTICS,
SPEECH AND SIGNAL PROCESSING vol. 37,
no. 12, December 1989, NEW YORK pages
1805 - 1814 , XP99483 Y.MING CHEN ET AL.
'Automatic and reliable estimation of glottal
closure instant and period'**

(73) Proprietor : **Philips Electronics N.V.**
**Groenewoudseweg 1**
**NL-5621 BA Eindhoven (NL)**

(72) Inventor : **Ma, Chang Xue**
**c/o INT. OCTROOIBUREAU B.V.,**
**Prof. Holstlaan 6**
**NL-5656 AA Eindhoven (NL)**
Inventor : **Willems, Leonardus Franciscus**
**c/o INT. OCTROOIBUREAU B.V.,**
**Prof. Holstlaan 6**
**NL-5656 AA Eindhoven (NL)**

(74) Representative : **Strijland, Wilfred et al**
**INTERNATIONAAL OCTROOIBUREAU B.V.,**
**Prof. Holstlaan 6**
**NL-5656 AA Eindhoven (NL)**

EP 0 533 257 B1

## Description

The invention relates to a speech signal processing apparatus, comprising detecting means for selectively detecting a sequence of time instants of glottal closure, by determining specific peaks of a time dependent intensity of a speech signal.

Glottal closure, that is, closure of the vocal cords, usually occurs at sharply defined instants in the human speech production process. Knowledge where such instants occur can be used in many speech processing applications. For example, in speech analysis, processing of the signal is often performed in successive time frames, each in the same fixed temporal relation to a respective instant of glottal closure. In this way, the effect of glottal closure upon the signal is more or less independent of the time frame, and differences between frames will be largely due to the change in time of the parameters of the vocal tract. In another application example, a train of glottal excitation signals is fed through a synthetic filter modelling the vocal tract in order to produce synthetic speech. To produce high quality speech, glottal excitations derived from physical speech are used to generate the glottal excitation signal.

For such applications, it is desirable to identify the instants of glottal closure from physically received human speech signals. An apparatus for finding these instants, or at least instants which stand in fixed phase relation to these instants is known from US patent No 3,940,565. According to this publication, the instant of glottal closure is identified as an instant of maximum amplitude in the signal. To detect this, the received speech signal is fed to a peak detector, and when the resulting peak signal is sufficiently large this detector triggers a flipflop to signal glottal closure.

The disadvantage of this method is that in not all speech signals glottal closure corresponds to the largest peak or even to a single peak. In voiced signals, there may be several peaks distributed over one period which may give rise to false detections. Also there may be several comparably large peaks surrounding each instant of glottal closure, which gives rise to jitter in the detected instants as the maximum jumps from one peak to another. Moreover in unvoiced signals no instants of glottal closure are present, but there are many irregularly spaced peaks, which give rise to false detection.

It is an object of the invention according to the appended claims to improve the robustness of glottal closure detection without requiring complex processing operations.

In the embodiment as claimed in Claim 1, the invention realizes the objective because it is characterized in that the apparatus comprises
- filtering means, for forming from the speech signal a filtered signal, through deemphasis of a spectral fraction below a predetermined frequency, the filtering means being arranged to feed the filtered signal to
- averaging means, for generating, through averaging in successive time windows, a time stream of averages representing said time dependent intensity of the speech signal.

In this apparatus, the physical speech signal is first filtered using a high pass or band pass filter which emphasizes frequencies well above the repetition rate of glottal closure. The filtering will emphasize the short term effects of glottal closure over longer term signal development which is due mainly to ringing in the vocal tract after glottal closure. However, in itself the filtering usually will not give rise to a single peak, corresponding to the instant of glottal closure. On the contrary, it will increase the relative contribution of noise peaks, and moreover the effect of glottal closure itself is often distributed over several peaks, an effect which can be worsened by the occurrence of short term echoes.

We have found that near the instant of glottal closure, there will usually be a large peak or many small peaks, both of which correspond to a large local signal density, i.e. aggregate peak number/amplitude count. Therefore, instead of containing only detection means for signal peaks, the apparatus comprises averaging means which determine the signal intensity by averaging contributions from successive windows of time instants. Consequently each instant of glottal closure will correspond to a single peak in the physical intensity, and for example the instant when the peak value is reached or the the center of the peak will have a time relation to the instant of glottal closure which is independent of the details of the speech signal.

In an embodiment of an apparatus according to the invention, characterized, in that the filtering means are arranged for feeding the filtered signal to the averaging means via rectifying means, for rectifying the filtered signal, through value to value conversion, into a strength signal. By rectifying is meant the process of obtaining a signal with a DC component which is responsive to the amplitude of an AC signal, in this case the strength signal from the filtered signal. A simple example of a rectifying value to value conversion is the conversion of filtered signal values to their respective absolute values. In general, any conversion in which values of opposite sign do not consistently yield exactly opposite converted values qualifies as rectifying, provided values with successively larger amplitudes are converted to converted values with successively larger amplitudes at least in some value range. Examples of rectifying conversions in this sense are taking the exponential of the signal, any power of its absolute value or linear combinations thereof.

One embodiment of the apparatus according to the invention is characterized, in that the conversion comprises squaring of values of the filtered signal. In this way, the DC component of the strength signal, i.e. the physical intensity, represents the energy density of the signal, which will give rise to optimal detection if the peaks amplitudes are normally distributed in the statistical sense.

In an embodiment of the apparatus according to the invention characterized, in that, in said averaging, the strength signal is weighted in each of the windows, with weighting coefficients which remain constant as a function of time distance from a centre of the window up to a predetermined distance, and from the predetermined distance monotonously decrease to zero at the edge of the window. A set of weighting coefficients which gradually decreases at the edges of the window mitigates the suddenness of the onset of contribution due to peaks in the filtered signal; this makes the onset of peaks in the physical intensity less susceptible to individual peaks in the filtered signal if this contains several peaks for one instant of glottal closure.

The precise temporal extent of the windows is not critical. However, if the windows are so wide as to encompass more than one successive instant of glottal closure, there will be contributions to the average which do not belong to a single instant of glottal closure and a poorer signal to noise ratio will generally occur in the intensity. To avoid overlap of contributions from neighboring instants of glottal closure, the extent should be made shorter than the time interval between neighboring instants of glottal closure, which for male voices is in the range of 8 to 10 msec and for female voices is in the range of 4 to 5 msec. Too small an extent incurs a risk of multiple detections, which is reduced as the extent is increased. Depending on the quality of the physical speech signal a minimum extent upward of 1 msec has been found practical; an extent of 3 msec was a good tradeoff for both male and female voices.

In one embodiment of the apparatus, characterized, in that it comprises width setting means, for setting a temporal width of the windows according to a pitch of the speech signal. The width setting means use a prior estimate of the pitch, i.e. the interval between neighboring instants of glottal closure, to restrict the temporal extent of the window to below this interval. The prior estimate may be obtained in any one of several ways, for example by feeding back an average of the interval lengths between earlier detected instants of glottal closure, or using a separate pitch estimator, or by using a user control selector etcetera. Since the most significant pitch differences are between male and female voices, a male/female voice selection button may be used for selecting from one of two extents for the window. Accordingly, an embodiment of apparatus according to the invention is characterized, in that the setting means are arranged for setting the temporal width to a first or second extent, the first extent lying between 1 and 5 milliseconds and the second extent lying between 5 and 10 milliseconds.

In an embodiment of the apparatus according to the invention characterized, in that the filtering means copy a further spectral fraction of the speech signal above 1kHz substantially indiscriminately into the filtered signal. This makes the filtering means easy to implement. For example, when the physical speech signal is a sampled signal, with 10 kilosamples per second, samples $I_n$ being identified by a sample time index "n", the expression

$$s_n = I_n - 0.9\, I_{n-1}$$

gives a satisfactory way of producing a filter signal $s_n$.

The detection of the instants of glottal closure may be performed by locating locally maximal intensity values, or simply by detecting when the physical intensity crosses a threshold, or by measuring the centre position of peaks. In an embodiment of the apparatus according to the invention characterized, in that the detection means comprise

- further averaging means, for determining an average DC content of the strength signal, averaged over a temporal extent wider than the width of the windows, the further averaging means feeding
- thresholding means, for determining whether the time dependent intensity exceeds the average DC content by more than a predetermined factor, excesses corresponding to the specific peaks. In this way, the thresholds are set automatically and are robust against variations in the nature of the signal. When the predetermined factor is set sufficiently high, unvoiced signals will not lead to detection of any instants of glottal closure.

In an embodiment of the apparatus according to the invention characterized, in that the detection means feed a synchronization input of frame by frame speech analysis means, for controlling positions of frames during analysis of the physical speech signal.

In an embodiment of the apparatus according to the invention characterized, in that the detection means feed an excitation input of vocal tract simulation means, for forming a synthesized speech signal.

BRIEF DESCRIPTION OF THE FIGURES

These and other advantages of the invention will be described using Figures, in which

Figure 1 depicts a conventional model of speech production

Figure 2 shows an apparatus for frame by frame speech analysis

Figure 3 shows a speech signal, an electroglottal signal and three signals obtained by processing the speech signal

Figure 4 shows further examples of processing results
Figure 5 also shows further examples of processing results
Figure 6 also shows further exmples of processing results.
Figure 7 shows an exemplary detector according to the invention for detecting instants of glottal closure by analysis of a speech signal
Figure 8 shows the results of a thresholding operation to detect instants of glottal closure.

## GLOTTAL CLOSURE AND ITS DETECTION

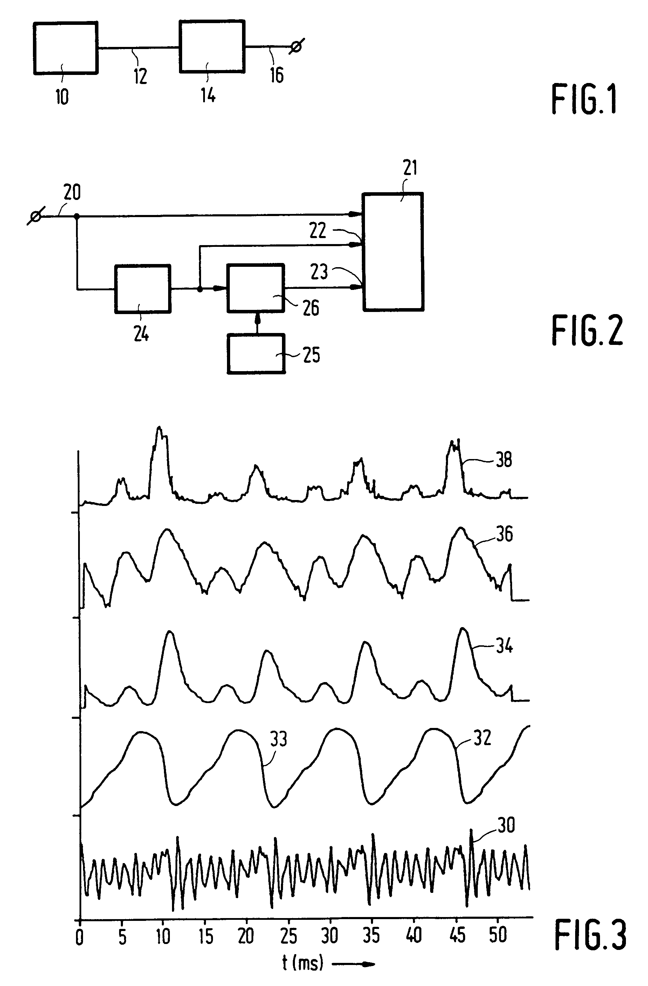

Figure 1 depicts a conventional model for the physical production of voiced human speech. According to this model, the vocal cords 10 produce a locally periodic train of excitations, which is fed 12 through the vocal tract 14, which effects a linear filter operation upon the train of excitations. The repetition frequency of the excitations, the "pitch" of the speech signal is usually in the range of 100Hz to 250Hz. The train of excitations has a spectrum of peaks separated by intervals corresponding to this frequency, the amplitude of the peaks varying slowly with frequency and disappearing only well into the kHz range. The linear filtering of the vocal tract on the other hand has a strong frequency dependence below 1kHz, often with pronounced peaks; especially at lower frequencies the spectral shape of the speech signal at the output 16 is therefore determined by the vocal tract.

Physical excitations produced by the vocal cords 10, have been found to have well defined instants of so called glottal closure. These are periodic instants where the vocal cords close, after which the vocal tract filter 14 is left to develop the output signal by itself through ringing. Detection of these instants of glottal closure is used for various purposes in electronic speech processing.

In one example of use of these instants, speech is synthesized using an electronic equivalent of Figure 1, with an excitation generation circuit 10 followed by a linear filter. In order to produce a high quality synthetic speech, the excitation generation circuit is arranged to generate a train of excitations with natural irregularities; for this purpose observed instants of glottal closure are used.

In another example, speech analysis, i.e. the decomposition of speech, is performed on a frame by frame basis, a frame being a part the speech signal between two time points; the time points are synchronized by the instant of glottal closure. Figure 2 shows an example of a speech analysis apparatus that works on this principle. At the input 20, the speech signal is received. It is processed in a processing circuit 21, which apart from the speech signal also receives a frame start signal 22, and an intra frame position pointer 23. Processing by the processing circuit is periodic, the period being reset by the reset input, and the position within the period being determined from the position pointer. The reset input is controlled by a glottal closure detection circuit 24, which detects instants of glottal closure by analysis of the speech signal received at the input 20. The glottal closure detection circuit 24 also resets a counter 26, driven by a clock 25, which in the exemplary apparatus generates the intra frame pointer. One advantage of frame by frame processing is that there is a fixed relation between the phase of glottal excitation and the position in the frame, whereby many of the effects of excitation of the vocal cords are independent of the particular window considered. Therefore the signal variation between windows is dominated by the effects of the vocal tract.

Figure 3 shows an example of an electroglottal waveform 32 obtained by electrophysiological measurement, the speech signal 30 produced from it, and the results 34, 36, 38 of processing the speech signal. The electroglottal waveform 32 has a very strong derivative at periodic instants (e.g. 33). These are the instants of glottal closure, and it is an object of the invention to determine these instants form the speech signal 30. As a first step in attaining the object, the speech signal 30 is converted into a filtered signal by linear high pass filtering. As the order in which linear operations are applied to a signal is immaterial for the result, one may consider the combined effect of the high pass filtering and the vocal tract filter 14 as the result of applying the vocal tract filter 14 to a high pass filtered version of the electroglottal waveform. This version will have a constant value most of the time, with sharp peaks at instants of glottal closure 33. Between the peaks, the development of the high pass filtered speech signal is only determined by the vocal tract filter 14, which means that successive high pass filtered speech signal values should be linearly predictable from preceding values, with more or less time invariant prediction coefficients.

At the peaks, this prediction will be incorrect. Detection of instants of glottal closure is attained by analyzing the amount of deviation that occurs in linear prediction. For this purpose, it is not necessary to determine the actual prediction coefficients; an analysis of the correlation matrix "R", of samples of the signal, is sufficient. This correlation matrix "R" is defined in terms of successive speech samples $s_i$

$$R_{i,j} = \Sigma_{n = 1..m} s_{i + n} s_{j + n}$$

The matrix indices i,j run over a predetermined range of "p" samples. The length of this range is called the order of the matrix, a reference for the position of the range in time is called the instant of analysis. The constant "m" is called the length of an analysis interval over which the correlation values are determined. When the speech samples "s" are linearly predictable from their predecessors, the matrix R will have at least one eigenvalue equal to zero. In general, all eigenvalues of R will be real and greater than or equal to zero, and when the speech samples "s" are not exactly linearly predictable, due to noise, or inaccuracies in the model presented in Figure 1, the smallest eigenvalue of R will at least be near zero.

One can use this property of the correlation matrix R to detect the amount of deviation from linear predictability, for example by evaluating the determinant (which is equal to the product of the eigenvalues, and will be small if the smallest eigenvalue is near zero), or, in another example, by determining the smallest eigenvalue. The logarithm of the determinant 36 and the smallest eigenvalue 38 are displayed in Figure 3 versus the instant in time at which they are determined. They were determined by sampling the filtered speech signal "I" at a rate of 10kHz, subjecting the sampled values to the following high pass filter in order to obtain the filtered values "s"

$$s_n = I_n - 0.9\, I_{n-1}$$

The analysis interval length in obtaining Figure 3 was m=30 samples and order of the matrix was p = 10. It can be seen that both the logarithm of the determinant 36 and the smallest eigenvalue 38 exhibit marked peaks at the instants of glottal closure, i.e. parts of the electroglottal waveform 32 with steep slopes.

However, determination of either the determinant or the smallest eigenvalue of a matrix require a substantial amount of computation. We have found that a similar and at least as robust a detection of the instant of glottal closure can be attained by evaluating the sum of the diagonal elements of the correlation matrix R, i.e. its trace, which is equal to the sum of its eigenvalues; experiment has shown that all eigenvalues of the correlation matrix exhibit marked peaks near the instants of glottal closure. Evaluation of the trace, however, is a much simpler operation than either determining the determinant of the smallest eigenvalue: it comes down to a weighted sum of the squares of the signal values, where the weight coefficients have a symmetrical trapezoidal shape as a function of time, the shape having a base width of m+p and a top width of m-p.

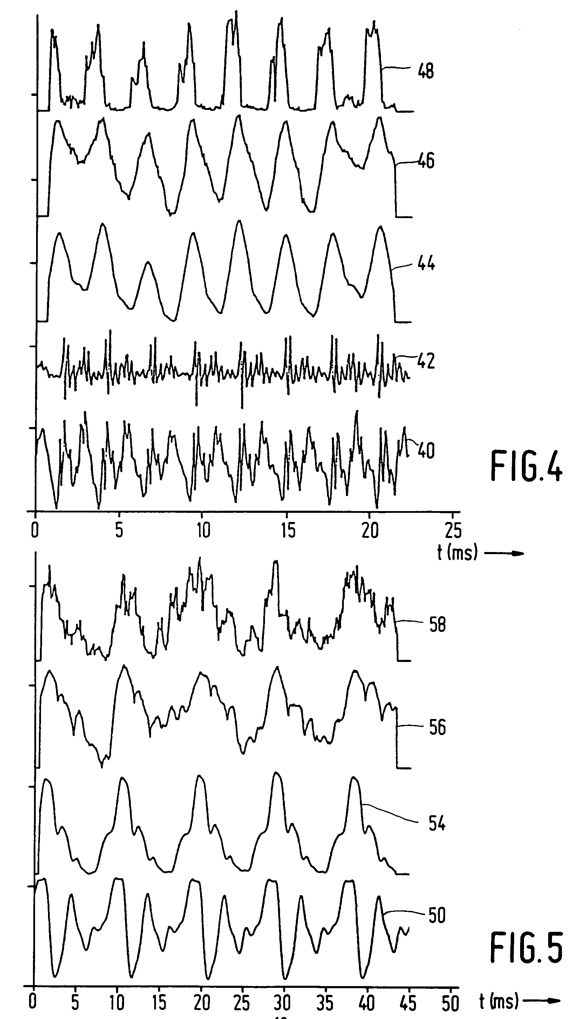

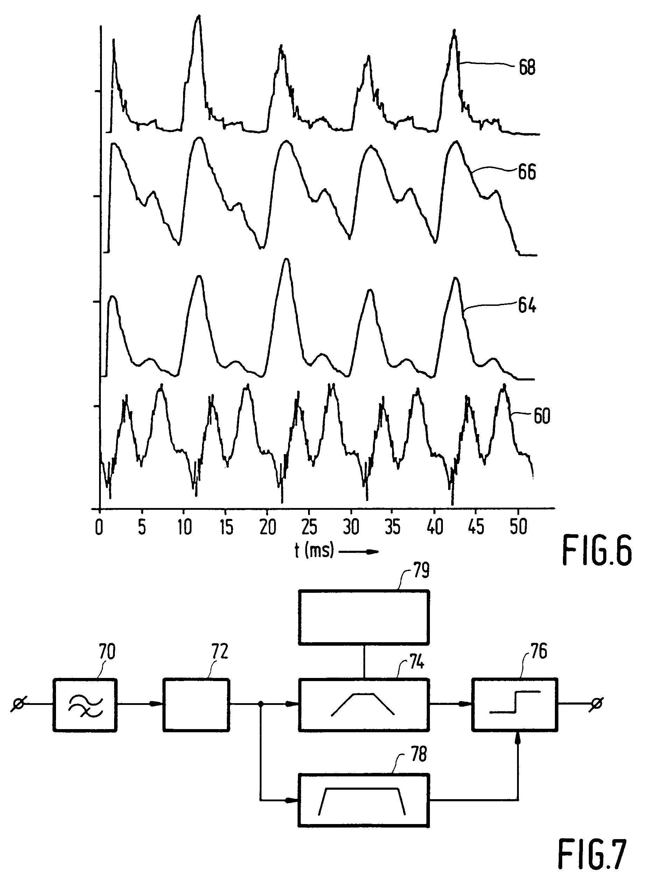

The result of evaluating the trace of the correlation matrix is plotted versus the instant of analysis in the third curve 34 of Figure 3. It will be seen that this curve also exhibits marked peaks near the instants of glottal closure. Further examples of processing results are given in Figures 4, 5 and 6, which illustrate various speech signals 40, 50, 60, the result of evaluating the smallest eigenvalue 46, 56, 66, the logarithm of the determinant 48, 58, 68 and the trace of the correlation matrix 44, 54, 64 as a function of the instant of analysis. Figure 4 also contains the result 42 of filtering signal 40 with a high pass filter. One should note that in Figure 3 the instant of glottal closure coincides with the maximum speech signal amplitude, and in Figure 5 it coincides with maximum signal derivative. This is by no means always the case; in many speech signals there are several peaks in either the signal or its derivative or both, and the instant of glottal closure often does not coincide with these peaks; Figures 4 and 6 provide illustrations of this. In Figure 6, the highest peaks have little or no high frequency content and do not give rise to larger detection signals 44. In Figure 4, there are three peaks in the high pass filtered signal near each instant of glottal closure, and the maximum amplitude occurs variably either at the first second or third peak. It will be clear that mere maximum detection in this case would lead to phase jitter in the detection of instants of glottal closure, whereas the trace signal 44 provides a robust detection signal.

## AN EXEMPLARY APPARATUS

Hence, we have found that the trace of the correlation matrix is a computationally simple and robust way of marking instants of glottal closure. An exemplary apparatus detecting instant of glottal closure is shown in Figure 7. Here the speech signal arriving at the input is filtered in a high pass filter 70, and then squared in the signal converter 72, subsequently, it is filtered with averaging means 74 which weights the signal in a window with a finite trapezoidally shaped impulse response (analysis of the expression for the correlation matrix shows that this is equivalent to trace determination). Preferably the extent of the impulse response should be less than the distance between successive instants of glottal closure. After the integrator 74, the signal is tresholded in a threshold detection circuit 76 which selects the largest output values as indicating glottal closure, but with a time delay relative to the input speech signal due to the impulse delay of the averaging means 74. In the example shown in Figure 7, the threshold is fed to the thresholding circuit via a further averaging circuit 58, which determines the average converted signal amplitude over a wider interval than the window of the averaging means 74.

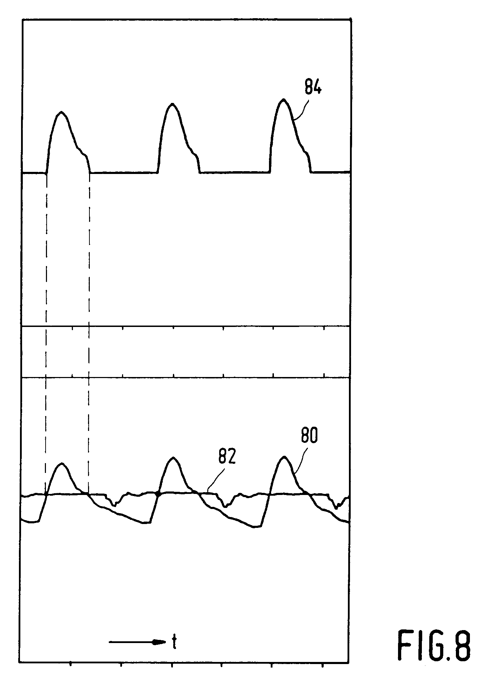

The output of the circuit is illustrated in Figure 8, where the output 80 of the averaging means 74 is shown, together with the result 82 of further averaging 78, and thresholding with the further average 84.

The effectiveness of the apparatus shown in Figure 7 can also be understood without reference to the mathematical analysis expounded above. Near the instant of glottal closure, the excitation signal at the point 12 in Figure 1 contains strong high frequency components. By using the high pass filter 70, these components are emphasized. They are then rectified by squaring them in the rectifier 72, and their density, or signal energy, is measured in the averaging means 74 which thus gets maximum output at the instant of glottal closure.

From this understanding of the effect of the apparatus, a number of variations in the apparatus which will leave it equally effective are readily derived. To begin with, the high pass filter 70 may be replaced with any filter (like a band pass filter) that selectively passes higher frequency components which are chiefly attributed to the sharp variation of the excitation signal near the instant of glottal closure.

Furthermore, the rectifier 72, which in the mathematical analysis used squaring of the signal may be replaced with any nonlinear conversion, like for example taking power unequal to two or the exponent of the filtered signal. The only condition is that the nonlinear operation generates a DC bias from an AC signal, which grows as the AC amplitude grows. A necessary and sufficient condition for this is that the nonlinear operation is not purely uneven (assigns opposite output values to opposite filtered signal values), and grows with amplitude. The nonlinear conversion can be performed by performing actual calculation of a conversion function (like squaring), but in many cases, a lookup table, containing converted values for a series of input values can be used.

The function of the averaging means 74 is to collect contributions from around the instant of glottal closure, and to distinguish this collection from the contributions collected around other instants. For this purpose, it suffices that averaging extends over less than the full distance between successive instants of glottal closure; the average may be weighted, most weight being given to instants close to the instant under analysis.

The maximum extent of the window must be estimated in advance. This can be done once and for all, by taking the minimum distance that occurs for normal voices, which is about 3 msec. Alternatively, one provide selection means 79 to adapt the integrator window length to the speaker, for example by using feedback from the observed distance between instants of glottal closure, or using an independent pitch estimate (the pitch being the average frequency of glottal closure). Another possibility is use of a male/female switch button in the selection means 79, which allows the user to select a filter extent corresponding either to typical female voices (distance between instants of glottal closure above 4 msec) or to male voices (above 8 msec).

The trapezoidal shape of the weighting profile of the averaging means 74, which was derived using the trace of the correlation matrix, is not critical and variations in the profile are acceptable, provided it has weighting values which substantially all have the same sign, and decrease in amplitude from a central position of the window. The width of the window defines the delay time of the averaging means 74; in general, the peaks at the output of the averaging means 74 will be delayed with respect to the instants of glottal closure by an interval equal to half the window width.

Finally, the extraction of the instants of glottal closure from the integrator signal can also be varied.

For example, one may use a fixed threshold, or an average threshold as in Figure 7, but the average may be multiplied by a predetermined factor in order to make the threshold more or less stringent. Furthermore, instead of thresholding, one may select maxima, i.e. instants of zero derivative, possibly in combination with thresholding.

Although the apparatus as described hereinbefore used separate components, processing sampled signals, it will be clear that the invention is not limited to this: it can be applied equally well to continuous (non sampled signals), or the processing can be performed by a single computer executing the several processing operations.

## Claims

1. A speech signal processing apparatus, comprising detecting means for selectively detecting a sequence of time instants of glottal closure, by determining specific peaks of a time dependent intensity of a speech signal, characterized, in that the apparatus comprises
   - filtering means for forming from the speech signal a filtered signal, through deemphasis of a spectral fraction below a predetermined frequency, the filtering means being arranged to feed the filtered signal to
   - averaging means, for generating, through averaging in successive time windows, a time stream of averages representing said time dependent intensity of the speech signal.

2. An apparatus according to Claim 1, characterized, in that the filtering means are arranged for feeding the filtered signal to the averaging means via rectifying means, for rectifying the filtered signal, through value to value conversion, into a strength signal.

3. An apparatus according to Claim 2, characterized, in that the conversion comprises squaring of values of the filtered signal.

4. An apparatus according to Claim 2 or 3 characterized, in that, in said averaging, the strength signal is weighted in each of the windows, with weighting coefficients which remain constant as a function of time distance from a centre of the window up to a predetermined distance, and from the predetermined distance monotonously decrease to zero at the edge of the window.

5. An apparatus according to Claim 1, 2, 3 or 4, characterized, in that it comprises width setting means, for setting a temporal width of the windows according to a pitch of the speech signal.

6. An apparatus according to Claim 5, characterized, in that the setting means are arranged for setting the temporal width to a first or second extent, the first extent lying between 1 and 5 milliseconds and the second extent lying between 5 and 10 milliseconds.

7. An apparatus according to any one of the Claims 1 to 6, characterized, in that the filtering means copy a further spectral fraction of the speech signal above 1kHz substantially indiscriminately into the filtered signal.

8. An apparatus according to any one of the Claims 2 to 7, characterized, in that the detection means comprise
   - further averaging means, for determining an average DC content of the strength signal, averaged over a temporal extent wider than the width of the windows, the further averaging means feeding
   - thresholding means, for determining whether the time dependent intensity exceeds the average DC content by more than a predetermined factor, excesses corresponding to the specific peaks.

9. An apparatus according to any one of the Claims 1 to 8, characterized, in that the detection means feed a synchronization input of frame by frame speech analysis means, for controlling positions of frames during analysis of the physical speech signal.

10. An apparatus according to any one of the Claims 1 to 9, characterized, in that the detection means feed an excitation input of vocal tract simulation means, for forming a synthesized speech signal.

**Patentansprüche**

1. Sprachsignalverarbeitungsgerät, mit Detektionsmitteln zum selektiven Detektieren einer Folge von Zeitpunkten des Schließens der Stimmritze durch Bestimmung bestimmter Peaks mit zeitabhängiger Intensität eines Sprachsignals, dadurch gekennzeichnet, daß das Gerät folgendes umfaßt:
   - Filtermittel, um aus dem Sprachsignal durch Absenken eines Spektralanteils unterhalb eine zuvor bestimmte Frequenz ein gefiltertes Signal zu bilden, wobei die Filtermittel eingerichtet sind, um das gefilterte Signal an
   - Mittelungsmittel zuzuführen, um durch Mittelung in aufeinanderfolgenden Zeitfenstern einen zeitlichen Fluß von die genannte zeitabhängige Intensität des Sprachsignals repräsentierenden Mittelwerten zu erzeugen.

2. Gerät nach Anspruch 1, dadurch gekennzeichnet, daß die Filtermittel eingerichtet sind, das gefilterte Signal den Mittelungsmitteln über Gleichrichtermittel zuzuführen, um das gefilterte Signal, über Wert-Wert-Umsetzung, in ein Stärkensignal gleichzurichten.

3. Gerät nach Anspruch 2, dadurch gekennzeichnet, daß die Umsetzung Quadrieren von Werten des gefilterten Signals beinhaltet.

4. Gerät nach Anspruch 2 oder 3, dadurch gekennzeichnet, daß das Stärkensignal bei der genannten Mittelung in jedem der Fenster gewichtet wird, mit Wichtungskoeffizienten, die als Funktion des zeitlichen Abstandes von einer Mitte des Fensters bis zu einem vorgegebenen Abstand konstant bleiben und die am Rand des Fensters von dem vorgegebenen Abstand aus monoton auf null abfallen.

5. Gerät nach Anspruch 1, 2, 3 oder 4, dadurch gekennzeichnet, daß es Breiteneinstellmittel umfaßt, um eine zeitliche Breite der Fenster entsprechend einer Tonlage des Sprachsignals einzustellen.

6. Gerät nach Anspruch 5, dadurch gekennzeichnet, daß die Einstellmittel eingerichtet sind, um die zeitliche Breite auf eine erste oder zweite Ausdehnung einzustellen, wobei die erste Ausdehnung zwischen 1 und 5 Millisekunden und die zweite Ausdehnung zwischen 5 und 10 Millisekunden liegt.

7. Gerät nach einem der Ansprüche 1 bis 6, dadurch gekennzeichnet, daß die Filtermittel einen weiteren Spektralanteil des Sprachsignals oberhalb 1 kHz nahezu wahllos in das gefilterte Signal kopieren.

8. Gerät nach einem der Ansprüche 2 bis 7, dadurch gekennzeichnet, daß die Detektionsmittel folgendes umfassen:
   - weitere Mittelungsmittel, um einen mittleren Gleichstrominhalt des Stärkensignals zu bestimmen, gemittelt über eine zeitliche Ausdehnung, die breiter als die Breite der Fenster ist, wobei die weiteren Mittelungsmittel
   - Schwellentransformationsmittel speisen, um zu bestimmen, ob die zeitabhängige Intensität den mittleren Gleichstrominhalt um mehr als einen vorgegebenen Faktor überschreitet, wobei Überschreitungen den bestimmten Peaks entsprechen.

9. Gerät nach einem der Ansprüche 1 bis 8, <u>dadurch gekennzeichnet</u>, daß die Detektionsmittel einen Synchronisationseingang von Mitteln für eine rahmenweise Sprachanalyse speisen, um Rahmenpositionen während der Analyse des physikalischen Sprachsignals zu steuern.

10. Gerät nach einem der Ansprüche 1 bis 9, <u>dadurch gekennzeichnet</u>, daß die Detektionsmittel einen Anregungseingang von Vokaltraktsimulationsmitteln speisen, um ein künstliches Sprachsignal zu bilden.

**Revendications**

1. Appareil de traitement d'un signal de parole comprenant des moyens de détection pour détecter sélectivement une séquence d'instants d'occlusion glottale par la détermination de crêtes spécifiques d'une intensité dépendant du temps d'un signal de parole, caractérisé en ce que l'appareil comprend:
   - des moyens de filtrage pour former, à partir du signal de parole, un signal filtré par désaccentuation d'une fraction spectrale jusqu'en dessous d'une fréquence prédéterminée, les moyens de filtrage étant agencés de manière à appliquer le signal filtré à
   - des moyens de moyennage pour générer par moyennage dans des fenêtres successives, un flux temporel de moyennes représentant ladite intensité dépendant du temps du signal de parole.

2. Appareil suivant la revendication 1, caractérisé en ce que les moyens de filtrage sont agencés de manière à appliquer le signal filtré aux moyens de moyennage par l'intermédiaire de moyens de redressement pour redresser le signal filtré par conversion de valeur à valeur en un signal de force.

3. Appareil suivant la revendication 2, caractérisé en ce que la conversion comprend l'élévation au carré de valeurs du signal filtré.

4. Appareil suivant la revendication 2 ou 3, caractérisé en ce que pour ledit moyennage, le signal de force est pondéré dans chacune des fenêtres à l'aide de coefficients de pondération qui restent constants en fonction d'une distance dans le temps, à partir d'un centre de la fenêtre jusqu'à une distance prédéterminée et qui diminuent de façon monotone, à partir de cette distance prédéterminée, pour atteindre zéro au bord de la fenêtre.

5. Appareil suivant la revendication 1, 2, 3 ou 4, caractérisé en ce qu'il comprend des moyens de réglage de largeur pour fixer une largeur temporelle des fenêtres en fonction d'une hauteur du signal de parole.

6. Appareil suivant la revendication 5, caractérisé en ce que les moyens de réglage sont conçus pour fixer la largeur temporelle à une première ou une seconde étendue, la première étendue étant comprise entre 1 et 5 ms et la seconde étendue étant comprise entre 5 et 10 ms.

7. Appareil suivant l'une quelconque des revendications 1 à 6, caractérisé en ce que les moyens de filtrage copient une autre fraction spectrale du signal de parole supérieure à 1 kHz en substance sans discrimination dans le signal filtré.

8. Appareil suivant l'une quelconque des revendications 2 à 7, caractérisé en ce que les moyens de détection comprennent :
   - d'autres moyens de moyennage pour déterminer une teneur moyenne en composante continue du signal de force établie sur une étendue temporelle supérieure à la largeur des fenêtres, ces autres moyens de moyennage alimentant
   - des moyens à seuil pour déterminer si l'intensité dépendant du temps excède la teneur moyenne en composante continue de plus d'un facteur prédéterminé, les excès correspondants aux crêtes spécifiques.

9. Appareil suivant l'une quelconque des revendications 1 à 8, caractérisé en ce que les moyens de détection alimentent une entrée de synchronisation de moyens d'analyse de parole, tranche par tranche, afin de vérifier les positions des tranches pendant l'analyse du signal de parole physique.

10. Appareil suivant l'une quelconque des revendications 1 à 9, caractérisé en ce que les moyens de détection alimentent une entrée d'excitation de moyens de simulation du conduit vocal pour former un signal de parole synthétisé.

FIG.1

FIG.2

t (ms) ⟶

FIG.3

FIG.4

t (ms) ⟶

FIG.5

t (ms) ⟶

FIG.6

FIG.7

FIG.8